Europäisches Patentamt

**European Patent Office**

**Office européen des brevets**

(19)

(11) Veröffentlichungsnummer: **0 024 015**

**A1**

(12)

# EUROPÄISCHE PATENTANMELDUNG

(21) Anmeldenummer: **80104523.8**

(22) Anmeldetag: **31.07.80**

(51) Int. Cl.$^3$: **C 03 B 5/027**
**C 03 B 5/033**

(30) Priorität: **09.08.79 DE 2932261**
**01.03.80 DE 3007937**

(43) Veröffentlichungstag der Anmeldung:
**18.02.81 Patentblatt 81/7**

(84) Benannte Vertragsstaaten:
**BE DE FR GB IT NL**

(71) Anmelder: **BAYER AG**
**Zentralbereich Patente, Marken und Lizenzen**
**D-5090 Leverkusen 1, Bayerwerk(DE)**

(72) Erfinder: **Joseph, Werner, Dr.**
**Ludwig-Aschoff-Strasse 20**
**D-5000 Koeln 80(DE)**

(72) Erfinder: **Rinkes, Hans, Dr.**
**Einsteinstrasse 23**
**D-5000 Koeln 80(DE)**

(54) **Verfahren und Vorrichtung zum Schmelzen von Fritten für anorganische oxidische Oberflächenbeschichtungen durch elektrische Widerstandsbeheizung.**

(57) Es wird ein Elektroofen zum kontinuierlichen Erschmelzen von Fritten für anorganische oxidische Oberflächenbeschichtungen mit Flüssignmetall-Elektroden, sowie ein Verfahren zum Erschmelzen von anorganischen oxidischen Fritten unter Einsatz des Elektroofens beschrieben. Als Elektroden werden dabei Metalle oder Metallegierungen eingesetzt, die bei der Schmelztemperatur des anorganischen oxidischen Materials flüssig sind, und deren Oxide Bestandteil des anorganischen oxidischen Materials sind.

FIG.1

EP 0 024 015 A1

BAYER AKTIENGESELLSCHAFT    . 5090 Leverkusen, Bayerwerk
Zentralbereich                    - Dp/W
Patente, Marken und Lizenzen

Verfahren und Vorrichtung zum Schmelzen von Fritten
für anorganische oxidische Oberflächenbeschichtungen
durch elektrische Widerstandsbeheizung

Der Einsatz von elektrischer Energie zum Schmelzen von Glas
hat bereits Eingang in die Technik gefunden. Eine Glasschmelze ist ein elektrischer Ionenleiter. Mittels Elektroden wird in der Schmelze ein elektrisches Feld erzeugt
und die Energie zum Schmelzen des Glases aufgrund seiner
endlichen Leitfähigkeit als Joule'sche Wärme zur Verfügung gestellt. Im Gegensatz zu flammenbeheizten Glasschmelzöfen, bei denen die Wärme über die Badoberfläche auf die
Schmelze übertragen werden muß, entsteht bei elektrischen
Öfen die Wärme direkt in der Schmelze, so daß elektrisch
beheizte Öfen bei erheblich günstigerer Energiebilanz betrieben werden können als flammenbeheizte Öfen. Nachteilig bei flammenbeheizten Öfen ist auch der notwendige Aufwand für Abgasreinigung für die Flammengase, mit denen zudem flüchtige und staubförmige Bestandteile der Glasschmelze
ausgetragen werden. Dagegen ist der Anfall an Abgas bei Elektroöfen minimal.

Der Hauptvorteil beim Schmelzen von Glas ist jedoch der,
daß mit Elektroöfen eine erheblich verbesserte Läuterung
und Homogenisierung der Glasschmelze erreicht wird.

Dagegen wurden Elektroöfen zur Herstellung von Fritten
für anorganische oxidische Beschichtungsmaterialien bis-

Le A 19 202 -Ausland

her nicht eingesetzt, obwohl Fritten und Glas weitgehend aus den selben Rohstoffen verschmolzen werden.

Gerade die besonders vorteilhafte Eignung von Elektroschmelz-öfen zur Läuterung und Homogenisierung von Glasschmelzen macht diese für das Schmelzen von Fritten ungeeignet. Während beim Glas ein vollständiges Schmelzen der Rohstoffe mit anschließendem Läutern und Homogenisieren angestrebt wird, um eine homogene Glasphase zu erhalten, wird beim Schmelzen von Fritten für anorganische oxidische Oberflächenbeschichtungen ein unvollständiger Schmelzprozeß, bei dem eine gewisse Teilkristallinität erhalten wird, die als Keim für die beim Abkühlen erwünschte Teilrekristallisation vorhanden sein muß, angestrebt. Derartige Keime sind bekanntlich als Inhomogenitäten für eine definierte Rekristallisation zur Trübung von Email- oder Keramikfritten beim Aufschmelzen auf metallische oder keramische Substrate notwendig.

In der DE-OS 2 753 351 wurde ein zum Schmelzen anorganischer Frittenmaterialien geeigneter Elektroofen beschrieben. Der Ofen zeichnet sich insbesondere durch eine geringe Schmelzbadtiefe aus.

Die vorliegende Erfindung betrifft nun eine Elektroofen zum kontinuierlichen Erschmelzen von Fritten für anorganische oxidische Oberflächenbeschichtungen mit Flüssigmetallelektroden.

Als Elektrodenmaterialien sind Metalle geeignet, die bei den Schmelztemperaturen der Fritten flüssig sind

Le A 19 202

- 3 -

und keinen zu hohen Dampfdruck besitzen, z.B. Blei,
Zinn, Antimon, Wismut, Zink, Cadmium, Tellur oder geeignete Legierungen dieser Metalle oder mit anderen
Metallen.

Bevorzugt werden solche Metalle als Flüssigmetallelektroden eingesetzt, deren Oxide Bestandteil der zu erschmelzenden Fritten sind.

Z.B. werden zum Erschmelzen von Bleisilikatfritten
vorzugsweise Bleielektroden eingesetzt.

Der erfindungsgemäße Elektroofen besteht ferner aus
einer Schmelzkammer, einer von der Schmelzkammer
durch ein Tauchwehr getrennten Arbeitskammer, einer
Auslaßöffnung für die geschmolzene Fritte aus der
Arbeitskammer, sowie Eintragsvorrichtungen für die
Rohmaterialien in die Schmelzkammer.

Die Schmelzkammer besitzt eine im wesentlichen ebene
Bodenfläche, in die Vertiefungen zur Aufnahme der
Flüssigelektroden eingelassen sind.

Die Anzahl der Flüssigelektroden beträgt im allgemeinen zwischen 3 und 6. Im Falle des Einsatzes von
2-Phasen-Strom ist die Anzahl der Elektroden eine
durch 2 teilbare Zahl, bei 3-Phasen-Strom eine durch

Le A 19 202

- 4 -

3 teilbare Zahl.

Die Stromzufuhr zu den Elektroden erfolgt durch in die Flüssigelektrode eintauchende Leiterschienen, z.B. aus Nickel oder geeigneten Legierungen. Zur Vermeidung der Auflösung der Leiterschienen in der Flüssigelektrode wird diese gekühlt. Dabei kann die Leiterschiene von einem Kühlmittel durchströmte Kanäle enthalten.

Das Flüssigelektrodenmaterial kann auch einen Kanal durch die Seitenwand des Schmelzofens erfüllen bis zu einem derart gekühlten Bereich, in dem das Elektrodenmetall erstarrt ist, sodaß der Kontakt zwischen den Leiterschienen und dem festen Elektrodenmetall hergestellt wird.

Vorzugsweise bestehen die Leiterschienen aus einem hochschmelzenden Metall oder einer Metallegierung, die mit dem Elektrodenmetall kein Eutektikum mit niedrigerem Schmelzpunkt als dem des Elektrodenmetalls bilden. In diesem Fall kommt es nur zu einer gewissen Auflösung des Leiterschienenmaterials, die bei Erreichen der eutektischen Zusammensetzung zum Stehen kommt.

Die Gesamtkontakfläche der Flüssigelektroden mit der anorganischen oxidischen Schmelze soll zwischen 1 und 10 % der Bodenfläche der Schmelzkammer, vorzugsweise 3-8 % betragen.

Zur Verwendung unerwünschter elektrolytischer Effekte wird der Ofen mit Wechselspannung, vorzugsweise 3-Phasen-Strom betrieben.

Die Schmelze soll eine relativ geringe Badtiefe aufweisen. Erfindungsgemäß beträgt das Verhältnis der Quadratwurzel aus der Schmelzbadoberfläche der Schmelzkammer zur Badtiefe zwischen 9 und 15.

Zum Beispiel soll die Badtiefe in einem kleinen Schmelzofen mit einer Schmelzoberfläche von 0,5 $m^2$ etwa 6 bis 8 cm, in einem solchen mit einer Schmelzbadoberfläche von 1 $m^2$ etwa 7 bis 10 cm, und in einem solchen mit 10 $m^2$ Schmelzenoberfläche ca. 20 bis 30 cm betragen.

Das Tauchwehr verhindert, daß ungeschmolzene, auf der Schmelzoberfläche schwimmende Rohstoffteilchen in die Arbeitskammer gelangen und von hier mit dem Entnahmestrom ausgetragen werden.

Erfindungsgemäß wird die Arbeitskammer im Verhältnis zur Schmelzkammer sehr klein ausgeführt, um die Vortrübungsfähigkeit der Schmelze zu erhalten. Das Verhältnis der horizontalen Querschnittsfläche des Schmelzbades in der Schmelzkammer zu der der Arbeitskammer soll größer als 50, vorzugsweise größer als 80 sein. Bei Öfen mit großer Schmelzkapazität kann das Verhältnis Werte von über 200 erreichen.

- 6 -

Der Eintrag der Rohmaterialien kann über Schnecken durch eine Öffnung in der Rückwand des Ofens erfolgen. Dabei sollen die Rohmaterialien locker auf die Schmelzbadoberfläche rieseln, so daß diese auf eine möglichst große Fläche der Badoberfläche auftreffen. Vorzugsweise befindet sich die Öffnung für den Rohstoff-Eintrag im Gewölbe des Ofens, so daß eine möglichst große Rieselhöhe und damit eine möglichst breite Streuung der Rohstoffe über die Schmelzbadoberfläche gewährleistet wird. Die Öffnung im Gewölbe soll dann in der Nähe der Rückwand des Ofens liegen, vorzugsweise etwa 1/5 der Länge der Schmelzkammer von der Rückwand entfernt. Vorteilhaft liegt die Eintragsöffnung in einer solch en Höhe über dem Schmelzbadniveau, die mindestens der Hälfte der Breite des Ofens beträgt.

Zum Anfahren des Elektroofens ist zusätzlich eine Flammenheizung vorgesehen, da die nicht geschmolzenen Rohstoffe den elektrischen Strom im allgemeinen nicht leiten. Die Flammenheizung wird abgestellt, sobald die Schmelze eine für die Zufuhr elektrischer Energie ausreichende Leitfähigkeit erreicht hat. Vorteilhaft kann die Anfahrheizung auch in Form von elektrisch beheizten Glühstäben ausgeführt sein.

Der erfindungsgemäße Elektroofen wird nachfolgend durch die Zeichnung näher erläutert.

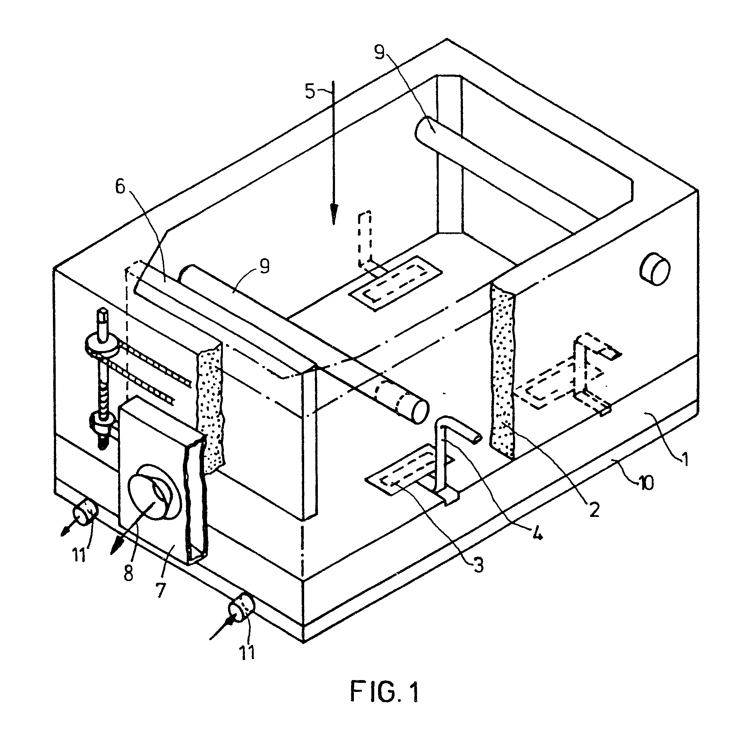

Figur 1 zeigt eine perspektivische Darstellung des erfindungsgemäßen Elektroofens.

Den in der Figur angegebenen Ziffern kommt im einzelnen die folgende Bedeutung zu:

| | |
|---|---|
| 1 | Bodenwanne des Ofens |
| 2 | Seitenwand des Ofens |
| 3 | Öffnung für Elektroden |
| 4 | Leiterschiene |
| 5 | Rohmaterialeintrag |
| 6 | Tauchwehr |
| 7 | Höhenverstellbarer Schmelzüberlauf |
| 8 | Auslaßöffnung für die Schmelze |
| 9 | Anfahrheizstäbe |
| 10 | Bodenkühlung |
| 11 | Kühlwasseranschlüsse |

Gegenstand der vorliegenden Erfindung ist auch das Verfahren zum Erschmelzen von Fritten für anorganische oxidische Oberflächenbeschichtungen unter Anwendung von mittels Elektroden der Schmelze zugeführter elektrischer Energie unter Verwendung des erfindungsgemäßen Elektroofens.

Vorzugsweise erfolgt die Rohstoffzuführung in den Ofen so, daß die gesamte Schmelzbadoberfläche mit ungeschmolzenem Rohstoff bedeckt ist. Die die Schmelzbadoberfläche

Le A 19 202

bedeckende Schicht aus ungeschmolzenem Rohstoff soll vorzugsweise eine Dicke von 1 bis 10 mm, vorzugsweise 3 bis 5 mm, besitzen. Dies wird dadurch gewährleistet, daß der Rohstoffeintrag streuend auf eine möglichst große Oberfläche des Schmelzbades erfolgt. Eine hinreichende Menge an ungeschmolzenem Rohstoff auf der Badoberfläche wird ferner durch die Regelung des Produkt-Entnahmestroms und der Zufuhr an elektrischer Energie gewährleistet. Vorzugsweise erfolgt die Regelung durch Zuführung eines konstanten Stromes bei konstantem Durchsatz an Fritte. Bei der für Ionenleiter charakteristischen Temperatur-Widerstandcharakteristik erhält man auf diese Weise ein sich selbst regelndes System, da sich der Widerstand bei fallender Temperatur erhöht, wodurch bei konstantem Strom die zugeführte Energie erhöht wird, andererseits sich der Widerstand bei sich erhöhender Temperatur erniedrigt, so daß sich die zugeführte elektrische Energie verringert.

Die mittlere Verweilzeit der Schmelze im Ofen beträgt vorzugsweise zwischen 3 und 6 Stunden.

Überraschenderweise wurde ferner gefunden, daß die bei flammenbeheizter Frittenschmelzung im allgemeinen notwendige Zuführung von Sauerstoffträgern bei dem erfindungsgemäßen Verfahren nicht notwendig ist. Als Sauerstoffträger dienen bei flammenbeheizten Öfen Nitratrohstoffe oder Peroxide. Wegen der bei Einsatz von nitrathaltigen Rohstoffen notwendigen Abgasreinigung werden erfindungsgemäß vorzugsweise nitratfreie Rohmaterialien eingesetzt, ohne daß diese durch vergleichsweise teuere Peroxide als Sauerstoffträger ersetzt werden müssen.

Le A 19 202

Weitere Vorteile des erfindungsgemäßen Verfahrens ergeben sich daraus, daß die bei flammenbeheizten Öfen auftretenden Verluste an flüchtigen Bestandteilen der Schmelze, wie Fluor, Bor und Alkali, nicht auftreten. Neben der Ersparnis an Rohmaterialien wird damit auch der für die Abgasreinigung zu treibende Aufwand erheblich reduziert.

Mit dem erfindungsgemäßen Verfahren können alle Arten anorganischer oxidischer Fritten für Oberflächenbeschichtungen erschmolzen werden. Insbesondere wurde gefunden, daß auch bei Bleisilikatfritten bereits bei der Netzfrequenz von 50 Hz eine Reduktion zum metallischen Blei nicht beobachtet wird.

Le A 19 202

Patentansprüche

1. Elektroofen zum kontinuierlichen Erschmelzen
   von Fritten für anorganische oxidische Oberflächenbeschichtungen mit Flüssigmetallelektroden.

2. Elektroofen nach Anspruch 1 mit Elektroden aus
   Blei, Zinn, Antimon, Wismut, Zink, Cacmium,
   Tellur oder geeigneten Legierungen dieser Metalle
   oder mit anderen Metallen.

3. Elektroofen nach Anspruch 1 oder 2, wobei das Verhältnis der Quadratwurzel aus der Schmelzbadoberfläche zur Schmelzbadtiefe zwischen 9 und
   15 beträgt.

4. Verfahren zum Erschmelzen von Fritten für anorganische oxidische Oberflächenbeschichtungen unter
   Anwendung von der Schmelze zugeführter elektrischer Energie, dadurch gekennzeichnet, daß
   ein Elektroofen nach einem der Ansprüche 1 bis
   3 eingesetzt wird.

5. Verfahren nach Anspruch 4, dadurch gekennzeichnet,
   daß die Regelung der Energiezufuhr durch Zuführung
   eines konstanten Stromes bei konstantem Produktdurchsatz erfolgt.

6. Verfahren nach einem der Ansprüche 4 oder 5, dadurch gekennzeichnet, daß der Rohstoffeintrag,

Le A 19 202

die Energiezufuhr und der Entnahmestrom so geregelt wird, daß die gesamte Schmelzbadoberfläche mit einer Schicht an ungeschmolzenem Rohstoff einer Dicke zwischen 1 und 10 mm, vorzugsweise 3 bis 5 mm, bedeckt ist.

7. Verfahren nach einem der Ansprüche 4 bis 6, dadurch gekennzeichnet, daß die mittlere Verweilzeit der Schmelze im Ofen 3 bis 6 Stunden beträgt.

8. Verfahren nach einem der Ansprüche 4 bis 7, dadurch gekennzeichnet, daß das ein solches Metall oder Legierungen solcher Metalle als Elektroden eingesetzt werden, deren Oxide Bestandteile der zu erschmelzenden Fritten sind.

9. Verfahren nach Anspruch 8, dadurch gekennzeichnet, daß Bleielektroden zum Erschmelzen von Bleioxid-haltigen Fritten eingesetzt werden.

Le A 19 202

FIG. 1

| Europäisches Patentamt | **EUROPÄISCHER RECHERCHENBERICHT** | |
|---|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>US - A - 1 610 377</u> (HITNER) <br> * Das ganze Dokument * <br><br> -- | 1,2,4 |
| D | <u>DE - A - 2 753 351</u> (BAYER) <br> * Das ganze Dokument * <br> & EP - A - 0 003 019 <br><br> -- | 4,6,7 |
| | <u>GB - A - 1 146 031</u> (GLAVERBEL) <br> * Figuren; Seite 2, Zeilen 108-113 * <br><br> -- | 1,2,4 |
| | <u>US - A - 2 014 615</u> (FERGUSON) <br> * Das ganze Dokument * <br><br> -- | 1,2 |
| A | <u>DE - C - 832 986</u> (SKINNER) <br> * Das ganze Dokument * <br><br> ---- | |

**KLASSIFIKATION DER ANMELDUNG (Int. Cl.³)**

C 03 B 5/027
5/033

**RECHERCHIERTE SACHGEBIETE (Int. Cl.³)**

C 03 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-09-1980 | VAN DEN BOSSCHE |

EPA form 1503.1   06.78